# EUROPEAN PATENT APPLICATION

(11) **EP 3 850 941 A1**
(43) Date of publication of application: **21.07.2021**
(21) Application number: 19859886.4
(22) Date of filing: 11.07.2019
(51) Int. Cl.: A01G 9/14, A01G 9/24, A01G 9/02, B05B 1/20, B65G 17/20, B65G 17/44, B65G 17/32, B65B 67/02

(54) **TROLLEY CONVEYOR AND PLANT CULTIVATION SYSTEM USING SAME**

(30) Priority: 12.09.2018 KR 20180109014; 07.06.2019 KR 20190067522
(71) Applicant: Korea Wheel Corp., Boryeong-si, Chungcheongnam-do 33448 (KR)
(72) Inventor: KIM, Jeong Yoon, Bucheon-si, Gyeonggi-do 14734 (KR); CHOE, Hun, Boryeong-si, Chungcheongnam-do 33448 (KR)
(74) Representative: dompatent von Kreisler Selting Werner - Partnerschaft von Patent- und Rechtsanwälten mbB
(86) International application number: PCT/KR2019/008581
(87) International publication number: WO 2020/054958

(57) **Abstract**

The present invention relates to a trolley conveyor and a plant cultivation system using the same, comprises a trolley conveyor for moving the plant port inside the plant cultivation factory, which includes a track 210 formed in a zigzag-shaped closed loop shape on the ceiling of the plant cultivation factory; a chain 220 provided to be movable along the track 210; a plurality of hanger 260 fixedly coupled to the chain 220 at regular intervals and moving along the track 210 together with the chain 220; and a port support part 270 fixedly coupled to the lower portion of each of the plurality of hangers 260 and provided with a port loading plate 271 on which the plant port A is stably placed.

## Description

### BACKGROUND

The present invention relates to a trolley conveyor and a plant cultivation system using the same, and in more detail, to a trolley conveyor and a plant cultivation system so that the quality of plants planted in all plant ports in a plant cultivation factory can be managed properly by using a trolley conveyor to move the plant ports suspended in the air.

Recently, there are increasing the trend to grow plants in a continuous and stable cultivation environment without being dominated by external influences. In other words, as the factory produces industrial products, interest in plant factories that grow indoor and ship plants is increasing.

An example of such a plant cultivation factory has been disclosed in Korean Patent Prepublication No. 10-2017-0025460 "A method of cultivating spinach using light quality in a closed plant cultivation factory system".

Since the disclosed plant cultivation factory cultivates plants in a fixed state in the factory, the plants at a specific location has poor lighting conditions, and thus there was a problem that the quality of the plants grown there is degraded compared to the plants at other locations with good lighting conditions.

In addition, in order to solve this problem, there are difficulties of having to change the position of each plant bed while the worker moves around the factory one by one.

At this time, since the worker has to move between the plant beds, there is a limit to the number of plant ports that can be arranged per unit area because a space for the worker to move must be provided when arranging the plant pots in the plant cultivation factory.

In addition, in the conventional plant cultivation factory, there is a problem that a lot of manpower is required because the worker must artificially fertilize the plant in order to bear fruit.

In addition, when plants need to be shipped for sale, workers must go around the inside of the plant cultivation factory to pick plant leaves or collect fruits, and pack the leaves or fruits after bringing them to the packaging table. There was a problem that a lot of labor was put in.

On the other hand, various studies on the structure of a trolley conveyor that is provided on the upper part of the building and moves the transported material are being conducted. An example of a conventional trolley conveyor has been disclosed in Korean Patent No. 10-1150368.

In the conventional trolley conveyor as disclosed, the hanger is eccentric with respect to the tubular rail track, and can shake laterally when the hanger is moved along the rail track. When the hanger shakes to the side of the rail track, the connecting member connecting the trolley chain and the hanger moves in contact with the edge of the opening of the rail track, causing noise as well as generating fine metal powder to be transported from the outer surface of the rail track. Accordingly, there is a risk of falling the fine metal powder on the moving plant port.

### SUMMARY

### OBJECTS OF THE INVENTION

An object of the present invention is to solve the above-described conventional problems, comprising a trolley conveyor circulated in the inside of the plant cultivation factory for automatically transferring the plant ports in the plant cultivation factory, so that all plant ports are exposed to sunlight and are provided a plant cultivation system with nutrients to be supplied under the same conditions.

Another object of the present invention is to provide a plant cultivation system capable of maximizing the number of plant pots per unit area because all plant ports are automatically moved by a trolley conveyor and no space is required for the operator to move.

Another object of the present invention is to provide a plant cultivation system in which a plurality of plant ports are connected to a trolley conveyor by hangers, water supply, nutrient supply, and insemination are made to be required for plant cultivation while all plant ports are circulated together by the trolley conveyor, so that labor may be minimize.

Another object of the present invention is to provide a plant cultivation system in which the plants to be shipped or packaged are supplied to the worker waiting in place, thereby reducing the working time and labor required for plant packaging.

Another object of the present invention is to provide a plant cultivation system capable of efficient transport without generating noise and foreign matter when the hanger unit is moved along the chain portion of the trolley conveyor.

Another object of the present invention is to provide a plant cultivation system capable of preventing the lubricating oil supplied to the chain from contaminating plants when the hanger unit is moved along the chain portion of the trolley conveyor.

The above objects and various advantages of the present invention will become more apparent from the preferred embodiments of the present invention by those skilled in the art.

The object of the present invention can be achieved by a trolley conveyor for moving the plant ports in the plant cultivation factory, comprising a track 210 formed in a zigzag shape closed loop on the ceiling of the plant cultivation factory; a chain 220 provided to be movable along the track 210; a plurality of hanger units 260 fixedly coupled to the chain 220 at regular intervals and moving along the track 210 together with the chain 220; and a port support part 270 provided with a port loading plate 271 for loading the plant port A, which is fixedly coupled to the lower portion of each of the plurality of hangers 260.

According to an embodiment, the track 210 includes a horizontal track 211 formed in parallel on each layer, a curved track 213 connecting the adjacent horizontal tracks 211 to each other, an inclined track 215 connecting the horizontal track 211 to the horizontal track of different layers, and the chain 220 provided to be circulated and moved along the track 210.

According to an embodiment, the chain 220 is formed by continuously coupling a plurality of chains 230 and 240 to each other, and each of the plurality of chains 230 and 240 comprises a vertical roller support part provided in a perpendicular to the inside of the track 210 to support a vertical roller rotated while contacting the bottom surface of the track 210; a horizontal roller support part provided on the track 210 in a horizontal direction to support a horizontal roller that is rotated while contacting both inner walls of the track 210; and an intermediate connection block provided between the vertical roller support part and the horizontal roller support part to support the vertical roller support part and the horizontal roller support part to be rotated vertically and horizontally to each other.

On the other hand, the object of the present invention can be achieved by a plant cultivation system, comprising a plant cultivation factory 100 with windows formed on the ceiling and the wall: a trolley conveyor 200 provided on the top of the plant cultivation factory 100 to be movable in a suspended state in the air for supporting a plurality of plant ports on which plants are planted; and a control unit 300 for controlling the drive of the trolley conveyor 200 according to the temperature and humidity of each zone inside the plant cultivation factory 100, wherein the trolley conveyor 200 comprises a track 210 formed in a zigzag closed loop shape in the ceiling of the plant cultivation factory; a chain 220 provided to be movable along the track 210; a plurality of hanger units 260 fixedly coupled to the chain 220 at regular intervals and moving along the track 210 together; and a port support part 270 provided with a port loading plate 271 for loading the plant port A, which is fixedly coupled to the lower portion of each of the plurality of hangers 260.

According to an embodiment, the plant cultivation factory 100 further includes a water supply section 130, a nutrient solution supply section 140, and an insemination section 150, and the track 210 may be formed to pass through the water supply section 130, the nutrient solution supply section 140, and the insemination section 150.

According to an embodiment, the plant cultivation factory 100 is provided with a packaging section 160 for separating flowers, fruits, or leaves from the plant and then packaging, and the track section 210 may be formed to pass through the packaging section 160.

According to an embodiment, the water supply section 130 is formed in a tunnel shape. The water supply section 130 may comprise a water supply pipe 131 formed along the moving direction of the track 210 under the water supply section 130, a water branch pipe 133 which is branched to both sides of the supply pipe 131 and is disposed perpendicular to the inner wall of the water supply section 130, and a water supply nozzle 135 provided at the the water branch pipe 133 for supplying to the plant port A loaded on the port support part 270 which is moved along the track 210.

According to an embodiment, the insemination section 150 is formed in a tunnel shape, and may comprise an air supply pipe 151 formed along the moving direction of the track 210 under insemination section 150, an air branch pipe 153 that is branched to both sides of the air supply pipe 151 and is disposed perpendicular to the inner wall of the insemination section 150, and an air supply nozzle 155 provided in the air branch pipe 153 to move air along the track 210 and to supply to the plant port A loaded on the port support part 270.

In the trolley conveyor and the plant cultivation system using the same according to the present invention, the plant port can be moved in a state that the plant port is suspended in the air by a trolley conveyor arranged in a zigzag shape throughout in the plant cultivation factory.

Accordingly, the plant ports may move and circulate through the inside of the plant cultivation factory by the movement of the chain without the need that workers transfer the plant ports while moving the plant port interval. Thus, the positions of all plant ports inside the plant cultivation factory can be changed by using a trolley conveyor, to receive sunlight evenly.

In addition, since there is no need for a space for workers to move, many plant ports as possible can be filled inside the plant cultivation factory, thereby maximizing space efficiency.

In addition, since the water supply, nutrient supply process, and insemination process are performed through the movement of the chain, thus plant can be cultivated to the minimum operator labor input. In these process, since the plant pots circulate inside the plant cultivation factory by the movement of the chain, there is an advantage that all plant in the pots can be cultivated with uniform quality.

In addition, since the plant to be shipped or packaged is moved by the chain to the location where the worker waits in place, the working time and labor required for plant packaging can be reduced.

In addition, in the trolley conveyor of the present invention, when the hanger is moved along the chain, the horizontal rollers and the vertical rollers of the chain are brought into contact with the bottom and both sides of the track, so that the track is not eccentric and moves in a state where the center is held.

In addition, when the hanger is moved along the chain, a collection container is provided at the bottom of the track to collect lubricant or foreign matter supplied to the chain. Accordingly, it is possible to prevent the lubricating oil or foreign substances from falling into the plant pot and contaminating the plant.

### BRIEF DESCRIPTION OF THE DRAWINGS

Fig. 1 is a side view showing a side configuration of a plant cultivation system according to the present invention,
Fig. 2 is a plan view showing a plan configuration of the plant cultivation system according to the present invention,
Fig. 3 is a side view showing a side configuration of a plant cultivation system according to a modification of the present invention,
Fig. 4 is a block diagram showing the internal configuration of the plant cultivation system according to the present invention,
Fig. 5 is a front view showing a configuration in which the trolley conveyor of the plant cultivation system according to the present invention supports the plant port,
Fig. 6 is a perspective view showing a configuration in which the trolley conveyor of the plant cultivation system according to the present invention supports the plant port,
Fig. 7 is an perspective view showing the exploded track and chain of the trolley conveyor of the plant cultivation system according to the present invention,
Fig. 8 is an exploded perspective view showing the configuration of the chain of the chain;
Figs. 9 and 10 are cross-sectional views each showing a cross-sectional configuration in another area of the trolley conveyor;
Fig. 11 is a cross-sectional view showing a modification of the trolley conveyor,
Fig. 12 is an exemplary view showing a process of supplying water to the plant pot in the water supply section of the plant cultivation system according to the present invention;
Fig. 13 is an exemplary view showing a process of supplying air to the plant port in the insemination section of the plant cultivation system according to the present invention;
Fig. 14 is an exemplary view showing a process of packaging plants in a plant pot in the packaging section of the plant cultivation system according to the present invention.

### DETAILED DESCRIPTION OF EMBODIMENTS

In order to understand the present invention, preferred embodiments of the present invention will be described with reference to the accompanying drawings. The embodiments of the present invention may be modified in various forms, and the scope of the present invention should not be construed as being limited to the embodiments described in detail below. This embodiment is provided to more completely explain the present invention to those of ordinary skill in the art. Therefore, the shape of elements in the drawings may be exaggerated to emphasize a more clear description. It should be noted that in each drawing, the same member may be indicated by the same reference numeral. Detailed descriptions of known functions and configurations that are determined to unnecessarily obscure the subject matter of the present invention will be omitted.

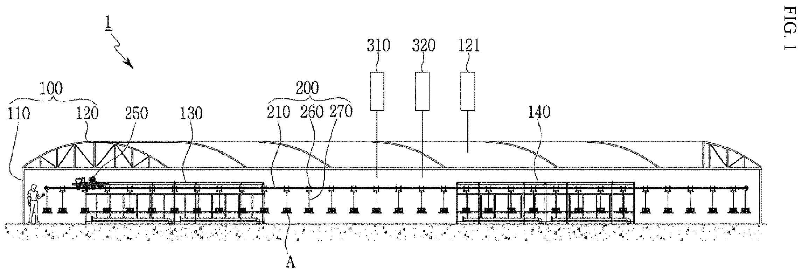

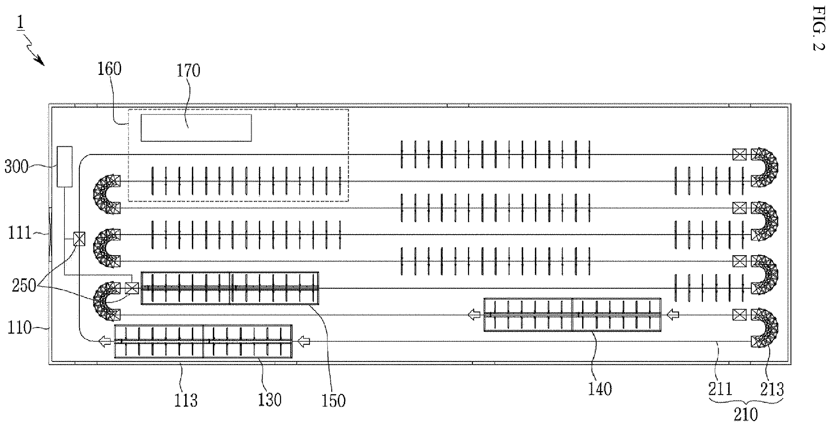

Fig. 1 is a side view showing a side configuration of a plant cultivation system 1 according to the present invention, and Fig. 2 is a plan view showing a plan configuration of the plant cultivation system 1.

As shown, the plant cultivation system 1 according to the present invention comprises the plant cultivation factory 100, the trolley conveyor 200 supporting the plant port A to be moved while hanging in the air and a control unit 300 that drives the trolley conveyor 200 according to environmental conditions such as temperature, humidity, and sunlight to control all plant ports A to be cultivated in the same quality under the same growing environment.

The plant cultivation system 1 according to the present invention can be automatically moved inside the plant cultivation factory 100 with the plant port A suspended in the air by the trolley conveyor 200. As a result, the plant pot A can be moved to a location where sunlight enters from the window 113 and the roof 120, so that all plant ports A can be cultivated while receiving the same amount of sunlight.

In addition, since the plant port A is automatically moved by the trolley conveyor 200, there is an advantage that the worker does not need to manually move the plant port A, thereby minimizing the labor of the worker.

The plant cultivation factory 100 is formed to have an indoor space in which plants can be grown, as shown in Figs. 1 and 2. The plant cultivation factory 100 is formed of an outer wall 110 and a roof 120. The outer wall 110 is provided with a door 111 through which a worker enters and exits, and a window 113 through which sunlight enters.

The roof 120 may be opened and closed automatically by the roof opening/closing part 121. As a result, sunlight and wind may flow into the window 113 and the roof 120. The roof opening/closing part 121 is automatically opened and closed by the control unit 300. At this time, the plant cultivation factory 100 may be provided in the form of a vinyl house for efficient lighting.

The plant cultivation factory 100 may be divided into a water supply section 130, a nutrient solution supply section 140, an insemination section 150, and a packaging section 160. The water supply section 130 is a section that supplies water to the plant port A supported by the trolley conveyor 200, and the nutrient solution supply section 140 supplies the nutrient solution containing nutrients to the plant port A. The insemination section 150 is a section in which insemination can be made automatically by the wind, and the packaging section 160 is a section in which the fruits or leaves of plants that have been grown are packaged.

The water supply section 130, the nutrient solution supply section 140, the insemination section 150, and the packaging section 160 of the plant cultivation factory 100 are continuously connected by a trolley conveyor 200. Thereby, the plant port A selectively moves through each section while being suspended from the trolley conveyor 200, and water supply, nutrient supply, insemination and packaging can be performed.

The water supply section 130, the nutrient solution supply section 140, the insemination section 150, and the packaging section 160 may be arranged in various ways within the plant cultivation factory 100.

The configuration of the water supply section 130, the nutrient solution supply section 140, the insemination section 150, and the packaging section 160 will be described in more detail below.

The trolley conveyor 200 allows the plant port A to move inside the plant cultivation factory 100 while being suspended in the air. The trolley conveyor 200 includes a track 210 provided on the ceiling of the plant cultivation factory 100, a chain 220 provided to be movable inside the track 210, and a hanger 260 coupled to the chain 220 at constant intervals, and a port support part 270 coupled to the lower portion of the hanger 260 and supporting the plant port A.

The track 210 is formed on the top of the plant cultivation factory 100 to form a path through which the chain 220 is circulated and moved. The track 210 includes a horizontal track 211 formed in parallel along the longitudinal direction of the plant cultivation factory 100, and a curved track 213 connecting the ends of each horizontal track 211. Accordingly, the track 210 as a whole forms a zigzag-shaped closed loop path.

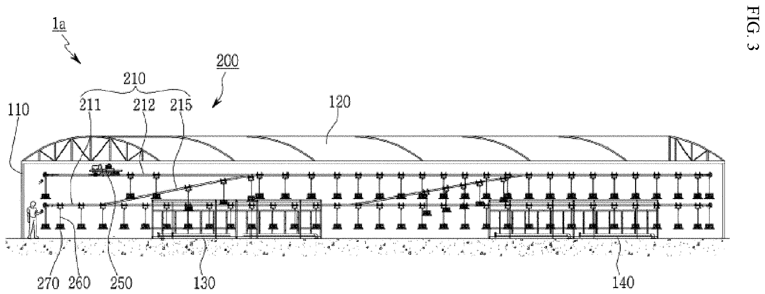

In this case, as shown in Fig. 3, when the plant cultivation factory 1a is formed in multiple layers, the track 210 further includes a second-layer track 212, and an inclined track 215 connecting the first-floor horizontal and the second-layer track 212. Here, the first-floor horizontal track 211, the curved track 213, and the second-floor track 212 are all formed continuously. Accordingly, the chain 220 may be moved from the first floor to the second floor through the inclined track 215, and may be moved from the second floor to the first floor and circulated.

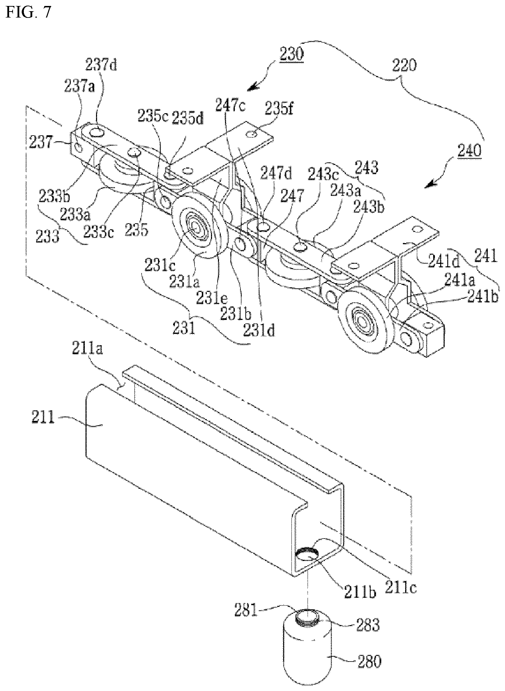

Since the configurations of the horizontal track 211, the curved track 213, and the inclined track 215 are the same, only the horizontal track 211 will be described in detail. The horizontal track 211 is formed in the shape of a square pipe with an opening 211a formed thereon, as shown in Fig. 7. The opening 211a forms a path through which the neck 231e of the chain 220 moves.

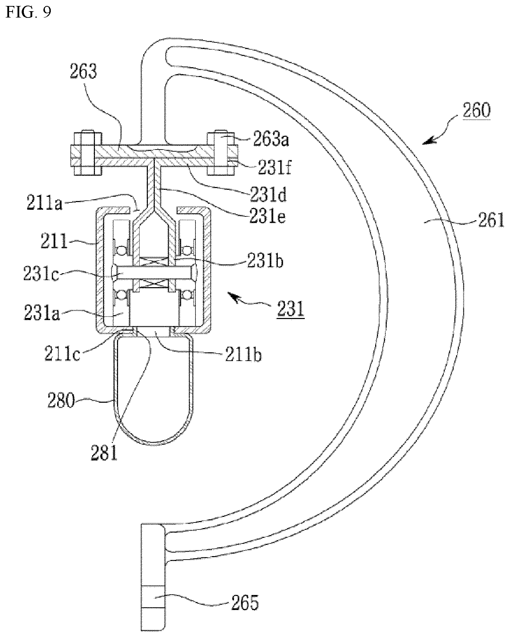

Container coupling holes 211b are formed on the bottom surface of the horizontal track 211 at regular intervals. As shown in Figs. 7 and 9, a collection container 280 is detachably coupled to the container coupling hole 211b. The collection container 280 collects foreign substances generated when the chain 220 moves along the track 210 and the lubricating oil supplied for smooth movement of the chain 220.

Foreign substances and lubricants in the horizontal track 211 are moved along the bottom surface thereof, and are collected in a collection container 280 coupled to the bottom surface. Thereby, foreign substances and lubricants are supplied to the plants of the plant pot A to prevent the plants from being contaminated.

The container coupling hole 211b and the collection container 280 are screwed together. To this end, a first screw thread 211c is formed on the inner wall surface of the container coupling hole 211b, and a second screw thread 283 is formed on the outer wall surface of the coupling pipe 281 formed as the upper portion of the collection container 280.

When the collection container 280 is filled with foreign substances and lubricant, the worker can separate the collection container 280 from the horizontal track 211, clean, and then recombine.

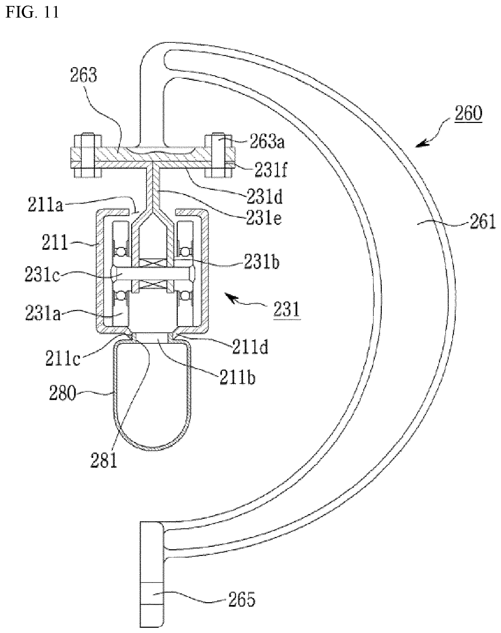

Meanwhile, as shown in Fig. 11, an inclined surface 211d formed to be inclined downward toward the container coupling hole 211b may be formed on the bottom surface of the horizontal track 211. Foreign substances or lubricants can be more easily discharged into the collection container 280 by the inclined surface 211d.

Here, the horizontal track 211 is formed side by side in a plurality of rows along the longitudinal direction inside the plant cultivation factory 100 as shown in Fig. 2. At this time, in the plant cultivation factory 100 according to the present invention, since the worker is not moved therein and the plant port A can be automatically moved, there is no need to provide a separate movement path for the worker.

Accordingly, the horizontal track 211 can be formed adjacent to each other at intervals corresponding to the width of the plant pot A, and the entire interior of the plant cultivation factory 100 can be filled with the plant pot A, whereby the advantages are obtained that the number of the plant pot A per unit cultivation area and space efficiency may be maximized.

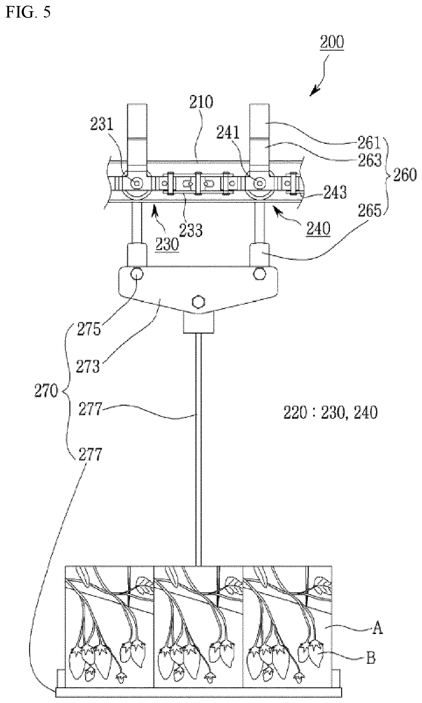

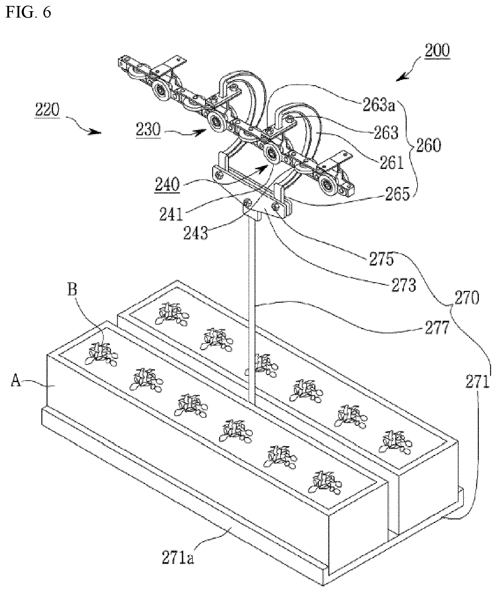

The chain 220 moves along the track 210 and allows the hanger part 260 to which the plant port A is suspended to move inside the plant cultivation factory 100. Figs. 5 and 6 are a front view and a perspective view showing a state in which the trolley conveyor 200 supports the plant port A.

As shown, the chain 220 is formed by successively combining chain units 230 and 240 with each other. Since the chain units 230 and 240 have the same configuration, only the chain unit 230 will be described in detail.

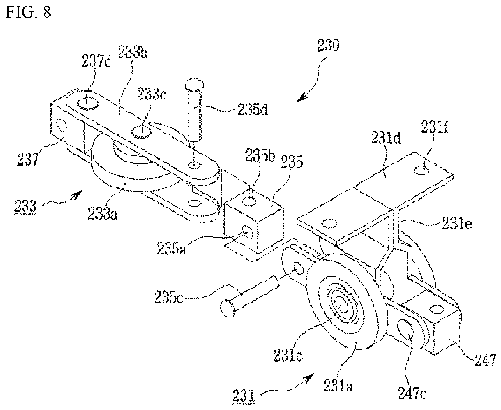

Fig. 7 is an exploded perspective view showing a structure in which the chain unit 230 and the chain unit 240 are combined to the horizontal track 211, and Fig. 8 is an exploded perspective view of the chain unit 230 showing the configuration disassembled.

The chain unit 230 is formed by coupling a first vertical roller support part 231 and a first horizontal roller support part 233 by a first intermediate connection block 235 as shown in Fig. 8. The first vertical roller support part 231 includes a pair of first vertical rollers 231a disposed vertically inside the track 210, a pair first vertical roller support frame 231b coupled to the inner side of the pair of first vertical rollers 231a, a first vertical roller rotation shaft 231c that penetrates the first vertical roller support frame 231b and rotatably support the pair of first vertical rollers 231a, a first hanger coupling flange 231d provided with a predetermined area in the horizontal direction above the pair of first vertical roller support frames 231b, and a first neck 231e connecting the first vertical roller support frame 231b and the first hanger coupling flange 231d.

The pair of the first vertical rollers 231a are disposed in a vertical direction inside the horizontal track 211 as shown in Fig. 9 to rotate and move along the bottom surface of the horizontal track 211. The outer diameter of the first vertical roller 231a is formed to be equal to or slightly smaller than the height of the horizontal track 211 and is provided to slide along the inside of the horizontal track 211.

The first vertical roller rotation shaft 231c passes through the pair of first vertical roller support frames 231b and is coupled to the center of the pair of first vertical rollers 231a. The first vertical roller rotation shaft 231c supports the pair of first vertical rollers 231a to enable idle rotation. To this end, a bearing (not shown) may be provided between the first vertical roller 231a and the first vertical roller rotation shaft 231c.

The first vertical roller rotation shaft 231c is provided with a length corresponding to the width of the horizontal track 211, so that the pair of first vertical rollers 231a are disposed symmetrically in both directions inside the horizontal track 211.

The first neck 231e is formed in the center direction from the top of the pair of first vertical roller support frames 231b and extends upward through the opening 211a of the horizontal track 211. The first neck 231e is formed smaller than the opening 211a so that it can be smoothly moved along the opening 211a.

The first hanger coupling flange 231d is formed to extend in a horizontal direction on the upper portion of the first neck 231e and is coupled to the flange coupling plate 263 of the hanger 260. The first fastening holes 231f are formed on both sides of the first hanger coupling flange 231d so that the first hanger coupling flange 231d is coupled to the flange coupling plate 263 by the first fastening member 263a.

As also seen in FIG. 8, the first horizontal roller support part 233 includes a first horizontal roller 233a, a pair of first horizontal roller support frames 233b which support the first horizontal roller 233a from above and below. And, a first horizontal roller rotation shaft 233c rotatably supports the first horizontal roller 233a with respect to the first horizontal roller support frame 233b.

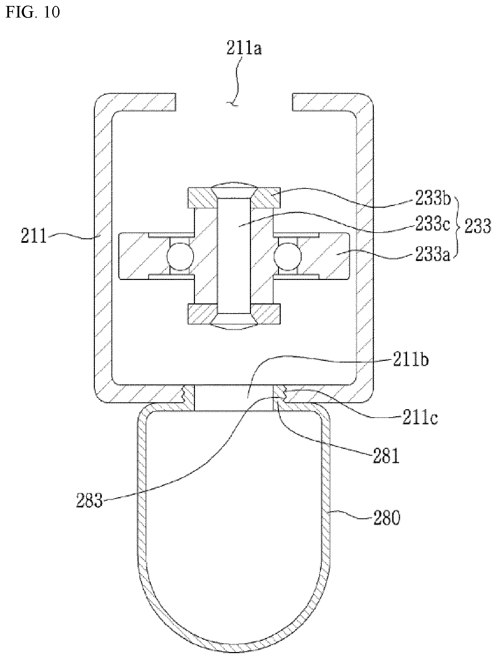

As shown in Fig. 10, the first horizontal roller 233a is positioned in the horizontal direction of the horizontal track 211. The first horizontal roller 233a has an outer diameter corresponding to the width of the horizontal track 211 or is formed to be a predetermined length smaller than the width.

The first chain unit 230 of the present invention is provided in a form in which the first vertical roller support part 231 and the first horizontal roller support part 233 are combined as shown in Figs. 9 and 10. In an embodiment, the combination provided in this manner because the hanger part 260 is coupled to support part 270 in an eccentric configuration.

When the hanger body 261 is eccentrically disposed on one side of the track 210 in a "C" shape as seen in FIG. 9, the plant port A is loaded on the container support part 270 provided under the hanger 260. In this manner, the load on hangar 260 becomes eccentric to one side.

When the hanger body 261 is eccentric in this way, the chain 220 may be inclined to one side inside the track 210 and may not move smoothly. In order to solve this problem, the chain 220 of the present invention continuously connects a chain unit in which vertical rollers and horizontal rollers are alternately arranged.

As shown in Fig. 9, a pair of first vertical rollers 231a are disposed on both sides inside the horizontal track 211, and the first vertical rollers 231a may be moved contacting the bottom surface of the horizontal track 211. The pair of first vertical rollers 231a move along the bottom surface of the horizontal track 211 and support the vertical load.

When the first horizontal roller 233a move along the inside of the horizontal track 211, the first horizontal roller 233a contact the inner wall surfaces of both sides of the horizontal track 211 and rotates, so that the chain 220 is not eccentric in one direction and can move in a balance fashion.

The first vertical roller support part 231 and the second vertical roller support part 241 are coupled by an intermediate connection block 235. As shown in Fig. 8, the intermediate connection block 235 is coupled between a pair of first vertical roller support frames 231b and a pair of first horizontal roller support frames 233b. The intermediate connection block 235 is provided in the form of a rectangular parallelepiped block. In the intermediate connection block 235, a first intermediate horizontal connection shaft insertion hole 235a is formed through in a horizontal direction, and a first intermediate vertical connection shaft insertion hole 235b is formed through a vertical direction.

The first intermediate horizontal connection shaft 235c is inserted into the first intermediate horizontal connection shaft insertion hole 235a through a pair of first horizontal roller support frames 233b disposed on the left and right sides. The first intermediate vertical connection shaft 235d is inserted into the first intermediate vertical connection shaft insertion hole 235b through the pair of first vertical roller support frames 231b arranged vertically.

As shown in Fig. 7 by the connection structure of the intermediate connection block 235, the first vertical roller support part 231 and the second vertical roller support part 241 may be moved along the track 210 in a coupled state. At this time, the first vertical roller support part 231 and the second vertical roller support part 241 may be rotated vertically around the first intermediate horizontal connection shaft 235c, and the first intermediate vertical connection shaft 235d to be rotated left and right.

As a result, the chain 220 can be smoothly moved not only the horizontal track 211 but also the curved track 213.

Meanwhile, a first end connection block 237 is provided at a rear end of the first horizontal roller support part 233. The first end connection block 237 is used to connect to a chain unit located in front of the chain unit 230.

As shown in Fig. 7, the chain unit 230 and the second chain unit 240 are coupled by a second end connection block 247. The second end connection block 247 is provided between the first vertical roller support frame 231b of the chain unit 230 and the second horizontal roller support frame 243b of the second chain unit 240.

The first vertical roller support frame 231b is coupled to a second end connection block 247 so ss to be rotatable vertically by a second horizontal end connection shaft 247c, and the second horizontal roller support frame 243b is coupled to a second end connection block 247 so as to be able to rotate left and right by the second end vertical connection shaft 247d.

The chain units 230 and 240 arranged adjacent to each other are coupled to each other so as to be able to rotate up and down and left and right by the front connection blocks 237 and 247. The chain 220, in which the chain units 230 and 240 are continuously coupled, can smoothly move the track 210 of various shapes.

More particularly, the horizontal rollers and vertical rollers alternately provided in each of the chain units 230 and 240 are in contact with the bottom surface and the inner surface of the track 210 and can be moved in balance without being eccentric. As a result, the first neck 231e does not contact the edge of the opening 211a of the horizontal track 211 and the chain 220 can be moved, so that noise and foreign matter are not generated when the chain 220 is moved.

The chain 220 is driven by the chain drive units 250. A plurality of chain drive units 250 are provided on the outside of the track 210 at regular intervals along the track 210, so that the chain 220 may move smoothly. The chain driving unit 250 comprises a motor and a power transmission that transmits driving force of the motor to the chain 220. The chain driving unit 250 is driven by a control signal from the control unit 300.

The hanger 260, of which upper portion is fixedly coupled to the chain 220, is moved together with the chain 220 and the lower portion of the hanger 260 is coupled to the port support part 270. The hanger 260 is provided in a pair as shown in Fig. 6 and is coupled to a pair of neighboring chain units 230 and 240, respectively

That is, one of the pair of hangers 260 is coupled to the chain 220 and the other is coupled to the second chain 220. A pair of hanger portions 260 are coupled together to a neighboring chain unit, and the port support part 270 are coupled to a lower portion of a pair of hanger 260.

Thereby, the load of the plant port A loaded on the port support part 270 is distributed and supported on the pair of hanger parts 260, so that the transport of the plant port A by the chain 220 can proceed more stably.

The hanger 260 comprises a hanger body 261 bent in a "C" or " ⊏" shape, and a flange coupling plate 263 which is provided horizontally at the top of the hanger body 261 and disposed in contact with the hanger coupling flange 231d of the chain unit 230 and 240, and a bracket coupling plate 265 provided perpendicularly to the lower end of the hanger body 261 and coupled to the hanger coupling bracket 273 of the port support part 270.

The hanger body 261 is disposed on one side of the chain part 220. The hanger body 261 is formed to extend from the upper center to the lower center at the side of the track 210 as shown in FIG. 9. The flange coupling plate 263 is formed in an area corresponding to the hanger coupling flanges 231d and 241d of each chain units 230 and 240 and disposed to be stacked on the hanger coupling flanges 231d and 241d to be combied by the first fastening member 263a.

The bracket coupling plate 265 is disposed perpendicularly to the lower portion of the hanger body 261 and is inserted between the pair of hanger coupling brackets 273 of the port support part 270. The bracket coupling plate 265 and the pair of hanger coupling brackets 273 are coupled by a second fastening member 275.

The port support part 270 is provided under the hanger part 260 and loads the plant port A. The port support part 270 is fixedly coupled to the hanger 260 and supports the plant port A to be moved in a suspended state by the movement of the chain 220.

As shown in FIG. 6, the port support part 270 comprises a pair of hanger coupling brackets 273 coupled with the bracket coupling plate 265 of the hanger 260, a port loading plate 271 on which the plant port A is loaded and a connection shaft 277 connecting the port loading plate 271 and the hanger coupling bracket 273.

The hanger coupling bracket 273 is provided in a pair, and the bracket coupling plate 265 of the pair of hangers 260 is inserted therebetween. The hanger coupling bracket 273 is provided in a plate shape having a length corresponding to the interval between the pair of hangers 260. The pair of bracket coupling plates 265 are inserted between both sides of the hanger coupling bracket 273 and coupled to the hanger coupling bracket 273 by a second fastening member 275.

The pot loading plate 271 is formed to have an area in which the plant pot A can be seated. A bent upward support wall 271a may be provided at an edge region of the pot loading plate 271 to support the plant pot A.

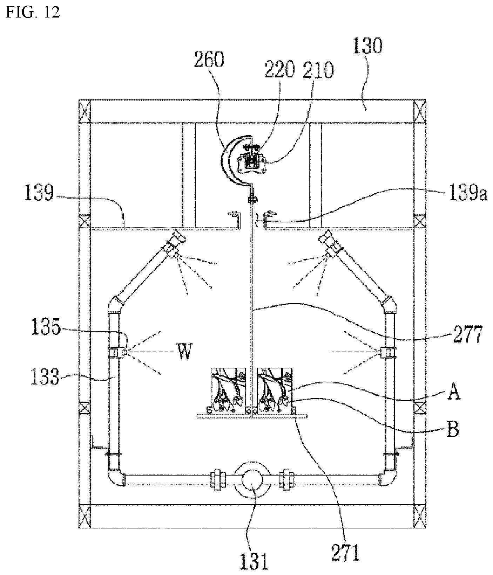

Fig. 12 is an exemplary view showing a process of moving the plant port A by the trolley conveyor 200 in the water supply section 130 of the plant cultivation factory 100.

As shown, the water supply section 130 is provided in a closed tunnel shape. A trolley conveyor 200 is provided on the upper part of the water supply section 130 so that the hanger 260 moves along the chain 220 and transfers the plant port A to the water supply section 130.

A water supply pipe 131 is formed at the bottom of the water supply section 130. The water supply pipe 131 is connected to a water storage tank or a water supply and receives water by a water supply pump 137. Water branch pipes 133 are formed extending to both sides at regular intervals along the longitudinal direction of the water supply pipe 131.

The water branch pipe 133 is formed to surround the inside of both sides of the tunnel forming the water supply section 130 as shown, and a plurality of water supply nozzles 135 are provided in the water branch pipe 133.

The water supply nozzles 135 are provided at a position and angle at which water can be supplied to the plant port A suspended in the air. As a result, the plant port A moves the water supply section 130 while being loaded on the port support part 270 of the hanger part 260 and is supplied with water.

In this case, an upper protection plate 139 is provided in the water supply section 130 so as to cross between the upper portion of the water branch pipe 133 and the track 210. The upper protection plate 139 blocks the water sprayed from the water supply nozzle 135 from being supplied to the track 210.

The nutrient solution supply section 140 is disposed to be spaced apart from the water supply section 130. The nutrient solution supply section 140 is formed in the same structure as the water supply section 130, with only the difference in supplying the nutrient solution, not water.

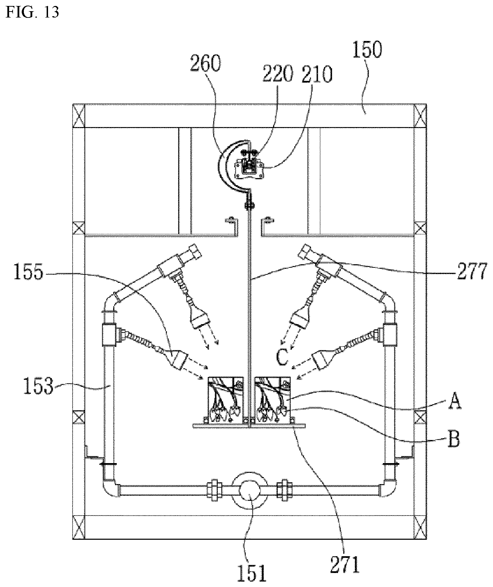

Fig. 13 is an exemplary view showing a process of moving the plant port A by the trolley conveyor 200 in the insemination section 150 of the plant cultivation factory 100.

The insemination section 150 is disposed to be spaced apart from the water supply section 130 and the nutrient solution supply section 140. In the insemination section 150, air is forcibly supplied to the plant pot A so that the pollen of flowers planted in the plant pot A is blown by the air so that natural insemination is made.

The insemination section 150 is formed in the shape of a tunnel having a predetermined length inside the plant cultivation factory 100. An air supply pipe 151 is formed at the bottom of the insemination section 150 along the longitudinal direction. The air supply pipe 151 is connected to the air supply pump 157 to supply external air to the inside the plant cultivation factory.

A plurality of air branch pipes 153 are formed in the air supply pipe 151 at regular intervals along the longitudinal direction, and air supply nozzles 155 are provided in the air branch pipe 153. The air supply nozzles 155 are disposed at a position and angle to which air can be supplied toward the plant port A.

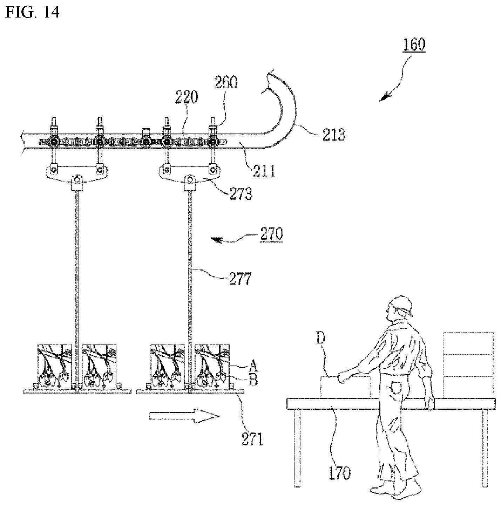

Fig. 14 is an exemplary view showing the configuration of the packaging section 160 of the plant cultivation factory 100. As shown in Figs. 2 and 14, a work table 170 is disposed in the packging section 160 of the plant cultivation factory 100.

On the work table 170, a packaging box D for packaging plants to sell the plants planted in the plant pot A is disposed. A trolley conveyor 200 is provided above the packaging section 160. When the worker stands under the trolley conveyor 200, the chain 220 moves and a plurality of hanger 260 coupled to the chain unit 220 sequentially moves the plant port A toward the worker.

Accordingly, the worker only needs to separate and package the plants or fruits from the plant port A arriving at the packaging section 160 without having to go around the inside of the plant cultivation factory 100 directly. There is an advantage in that it can significantly reduce overtime.

The control unit 300 drives the trolley conveyor 200 according to the external weather conditions, the amount of sunlight, the temperature and humidity inside the plant cultivation factory 100, so that the growth environment of all the plant ports A in the plant cultivation factory 100 may be adjusted equally to the plant ports A.

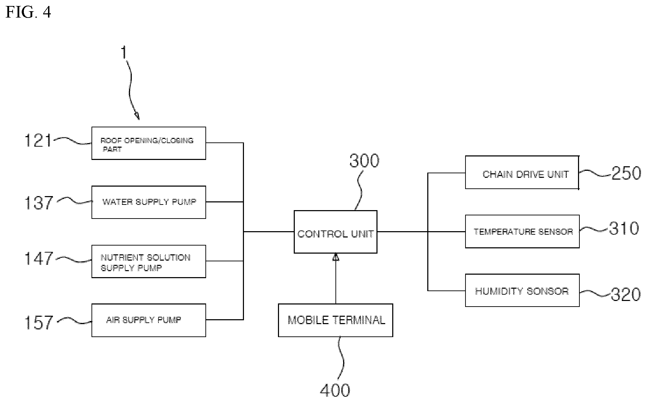

Fig. 4 is a block diagram schematically showing a control flow of the control unit 300. The plant cultivation factory 100 is provided with a temperature sensor 310 and a humidity sensor 320, respectively. The temperature sensor 310 is provided inside and outside the plant cultivation factory 100, respectively, and transmits the internal temperature and the external temperature to the control unit 300.

In addition, the temperature sensor 310 is disposed in different areas inside the plant cultivation factory 100 and transmits the temperature of each area to the control unit 300. The inside of the plant cultivation factory 100 may have different temperatures between a window side with sunlight and a shade side to which sunlight does not enter. The temperature sensor 310 of each region transmits the temperature of the region to the control unit 300.

The humidity sensor 320 measures the humidity inside the plant cultivation factory 100 and transmits it to the control unit 300.

The control unit 300 drives the chain drive unit 250 when the temperature difference between the positive and the shade is large based on the temperature inside the plant cultivation factory 100 transmitted from the plurality of temperature sensors 310, so that the plant pots on the positive and the shade allows their position to be switched.

In addition, the control unit 300 drives the roof opening/closing unit 121 based on the external temperature transmitted from the temperature sensor 310 to allow sunlight and wind to come into the plant cultivation plant 100.

In this case, the control unit 300 may be operated by receiving an input signal manually through an input unit (not shown) or by receiving an input signal manually through a mobile terminal 400 of a worker such as a smartphone.

The control unit 300 drives the chain drive unit 250 and the water supply pump 137 when the input signal is manually applied from the operator or the humidity sensed by the humidity sensor 320 is lower than the predetermined value, so that the plant port A moves to the water supply section 130 along the chain 220 to receive water.

In addition, the control unit 300 drives the chain drive unit 250 and the nutrient solution supply pump 147 according to the input signal, so that the plant port A moves to the nutrient solution supply section 140 along the chain unit 220 to receive the nutrient solution to be supplied.

In addition, the control unit 300 drives the chain drive unit 250 and the air supply pump 157 so that the plant port A moves to the insemination section 150 along the chain 220 to receive air and natural insemination can be done.

The plant cultivation process of the plant cultivation system 1 according to the present invention having such a configuration will be described with reference to Figs. 1 to 14.

As shown in Figs. 1 and 2, a trolley conveyor 200 is provided on the top of the plant cultivation factory 100. The trolley conveyor 200 is disposed on the top of the plant cultivation factory 100 to fill the entire area continuously in a zigzag shape in the horizontal direction as shown in FIG. 2.

At this time, the trolley conveyor 200 is closely arranged horizontally except for a clearance interval in which the adjacent port loading plates 271 can be moved without touching each other. That is, there is no space for the worker to move, and the plant pot A is arranged in a state suspended in the air over the entire area.

Accordingly, it is possible to maximize the space use efficiency by maximizing the number of plant ports A that can be arranged in the entire plant cultivation plant 100.

As shown in Figs. 5 and 6, the trolley conveyor 200 includes a track 210 continuously disposed on the top of the plant cultivation factory 100 and a chain 220 provided to be movable along the track 210, a hanger 260 coupled at regular intervals along the longitudinal direction of the chain 220, and a port support 270 provided under the hanger 260 and in which the plant port A is loaded.

Each plant port A is seated on the port support 270 coupled to the hanger 260. Thereby, each plant port A moves along the track 210 in the inside of the plant cultivation factory 100 together with the hanger 260 by the movement of the chain 220 while hanging in the air.

As shown in Figs. 7 and 8, the chain 220 is formed by successively combining chain units 230 and 240 with each other. In each of the chain units 230 and 240, the vertical roller support 231 and 233 and the horizontal roller support 241 and 243 are coupled so as to be able to rotate up and down and left and right by an intermediate connection block 235. And, the neighboring chain units 230 and 240 are coupled to be able to rotate up and down and left and right by the front end connection blocks 237 and 247.

As shown in Fig. 9, the vertical roller support 231 and 241 of each chain units 230 and 240 are driven by the driving force of the chain driving unit 250 so that a pair of vertical rollers 231a and 241a are formed at the bottom of the track 210, moves along the plane and supports the vertical load.

As shown in Fig. 10, the horizontal roller support 233 and 243 of each chain units 230 and 240 move while the horizontal rollers 233a and 243a contact both inner walls of the track 210.

The hanger 260 is eccentrically coupled to one side of the track part 210, but a pair of vertical rollers 231a and 241a and horizontal rollers 233a and 243a are arranged to move in the track 210 in contact with the inner wall surface of the track 210 in vertical and horizontal directions of the track 210, so that the chain 220 may move in the inside of the track 210 to the state that is not made eccentric and keeps balance. As a result, as shown in FIG. 9, the first neck 231a of the vertical roller support parts 231 and 241 can move without touching the edge forming the opening 211a of the track 210. Accordingly, noise is not generated when the chain 220 and the hanger 260 move along the track 210, and generation of foreign matter or dust can be minimized.

The plurality of temperature sensors 310 and humidity sensors 320 provided in each zone inside the plant cultivation factory 100 sense the temperature and humidity of each zone and transmit it to the control unit 300. The control unit 300 drives the chain 220 in response to the transmitted temperature and humidity.

Thereby, the plant ports A located near the window 113 and receiving relatively much sunlight are moved to the inside or the shade side of the plant cultivation factory 100, and the plant ports A located inside or on the shade side are moved to the window 113 side.

As shown in Fig. 3, in the case of having a multilayer structure, the plant pots A of the second floor may be moved to the first floor, and the plant pots A of the first floor may be moved to the second floor.

The chain 220 is driven in response to the internal humidity by the control unit, so that the plant ports A pass through the water supply section 130 to receive water as shown in Fig. 12. Then, the plant ports A are moved to the nutrient solution supply section 140 for each set period to receive the nutrient solution.

And, when the insemination time comes, the plant ports A are moved to the insemination section 150 as shown in Fig. 13, in which pollen is moved to the flowering plants in the plant ports A by the air supplied, so that the insemination may occur naturally.

In this way, the chain 220 is driven so that all the plant ports A inside the plant cultivation plant 100 move and circulate while hanging in the air, so that the growing environment of all the plant ports A is the same. As a result, the uniform quality of flowers, fruits, or leaves formed in the plant pot A can be obtained.

When the growth of the plants in the plant pot A is completed and harvesting, as shown in FIG. 14, the worker is located in the packaging section 160, and each plant port A suspended from the corresponding port support part 270 moves toward the working table 170.

The worker separates the fruit or flower or leaf from the plant port A of the port support part 270 that is moved to the work table 170, and packs the separated flower, fruit or leaf in a packaging box (D).

Since the worker is positioned in place and the plant port A moves toward the work table, the movement of the worker required for packaging is minimized and work efficiency can be improved.

On the other hand, when the lubricant or foreign matter applied to the chain 220 moves to the bottom surface of the track 210 during the moving process of the chain part 220, the bottom of the track part 210 as shown in FIG. 9, the lubricating oil and foreign substances are dropped into the collection container 280 coupled to the track part 210 and stored. Accordingly, it is possible to prevent the lubricating oil or foreign substances from falling into the plant pot A and contaminating the plant.

The control unit 300 adjusts the speed of the chain unit 220 at a low speed so that the plants of the plant port A moving while being suspended in the air do not feel vibration or stress due to the movement.

On the other hand, the plant cultivation system according to a preferred embodiment of the present invention is provided with a work table inside the plant cultivation factory. However, in some cases, the work table and the unloading unit for unloading the plant port to the work table may be provided outside the plant cultivation plant, and the track may be selectively connected to the outside of the plant cultivation factory.

As described above, the plant cultivation system according to the present invention can move in a state in which the plant port is suspended in the air by a trolley conveyor arranged in a zigzag shape throughout the interior of the plant cultivation plant.

Accordingly, the operator does not neet to move between the plant pots for moving the plant ports, the plant ports move and circulate through the inside of the plant cultivation factory by the chain. Using such a trolley conveyor, all plant ports inside the plant cultivation plant can be moved to receive sunlight evenly.

In addition, since there is no need for a space for workers to move, the interior of the plant cultivation plant can be filled with plant pots, thereby maximizing space efficiency.

In addition, since the water supply, nutrient supply process, and insemination process are automatically performed by the movement of chain, plant growth can proceed without the input of labor by the worker. In this process, since the plant pot circulates inside the plant cultivation plant by the movement of the chain, there is an advantage that all plant pots can be cultivated with uniform quality.

Furthermore, since the worker waits in place, and the plant to be shipped or packaged is moved by the chain to the location where the worker waits, working time and labor required for plant packaging can be reduced.

In addition, in the plant cultivation system of the present invention, when the hanger is moved along the chain portion of the trolley conveyor, the horizontal rollers and vertical rollers of the chain contact the bottom and both sides of the track to move in a state that is not eccentric to the track. As a result, noise and foreign substances are not generated when the chain is moved, and efficient transport may be possible.

When the hanger is moved by the chain, a collection container is provided at the bottom of the track to collect lubricant or foreign matter supplied to the chain. Accordingly, it is possible to prevent the lubricating oil or foreign substances from falling into the plant pot and contaminating the plant.

The embodiments of the plant cultivation system of the present invention described above are merely exemplary, and those of ordinary skill in the technical field to
which the present invention belongs will well understand that various modifications and other equivalent embodiments are possible. Therefore, it will be appreciated that the present invention is not limited to the form mentioned in the detailed description above. Therefore, the scope of the present invention should be determined by the technical spirit of the appended claims. In addition, the present invention is to be understood as including the spirit of the present invention as defined by the appended claims and all modifications, equivalents and substitutes within the scope thereof.

**Explanation Of The Reference Numerals**

| | |
|---|---|
| 1 : Plant cultivation system | 100: Plant cultivation factory |
| 110 : Outer wall | 111: Door |
| 113: Window | 120: Roof |
| 121 : Roof opening and closing part | |
| 130: Water supply section | |
| 131: Water supply pipe | 133: Water branch pipe |
| 135 : Water supply nozzle | 137: Water supply pump |
| 139 : Upper protection plate | |
| 139a: Connecting shaft moving path | |
| 140 : Nutrient solution supply section | |
| 147: Nutrient solution supply pump | |
| 150 : Insemination section | 151: Air supply pipe |
| 153 : Air branch pipe | 155: Air supply nozzle |
| 157 : Air supply pump | 160: Packing section |
| 170 : Packing table | 200: Trolley conveyor |
| 210 : Track part | 211: Horizontal track |
| 211a: Opening | 211b: Container coupling hole |
| 211c: First thread | 211d: Inclined surface |
| 212 : Seond floor track | 213: Curved track |
| 215 : Inclined track | 220: Chain part |
| 230 : First unit chain | 231: First vertical roller support part |
| 231a: First vertical roller | |
| 231b: First vertical roller support frame | |
| | |
| 231c: First vertical roller rotation shaft | |
| 231d: First hanger coupling flange | |
| 231e: First neck | 231f: First fastening |
| 233 : First horizontal roller support part | |
| 233a: First horizontal roller | |
| 233b: First horizontal roller support frame | |
| 233c: First horizontal roller rotation shaft | |
| 235 : Intermediate connection block | |
| 235a: Intermediate horizontal connection shaft insertion hole | |
| 235b: Intermediate vertical connecting shaft insertion hole | |
| 235c: Intermediate horizontal connecting shaft | |
| 235d: Middle vertical connection shaft | |
| 237: First end connection block | |
| 237a: First end horizontal connection shaft insertion hole | |
| 237d: First end vertical connection shaft | |
| 240 : Seond unit chain | 241: Seond vertical roller support part |
| 243 : Seond horizontal roller support part | |
| 247: Seond end connection block | |
| 247c: Second end horizontal connection shaft | |
| 247d: Second end vertical connection shaft | |
| 250 : Chain drive unit | 260: hanger |
| 261 : Hanger body | 263: Flange coupling plate |
| 263a: First fastening member | 265: Bracket coupling plate |
| 270 : Port support part | 271: Port loading plate |
| 217a: Support wall | 273: hanger coupling bracket |
| 275 : Second fastening member | 277: Connecting shaft |
| 280 : Collection container | 281: Coupling pipe |
| 218 : Second thread | 300: Control unit |
| 310 : Temperature sensor | 320: Humidity sensor |
| 400 : Mobile terminal | |
| A : Plant pot | |
| B: Plant | |
| C: Air | |
| D: Packing box | |
| W : Water | |

### INDUSTRIAL AVAILABILITY

The present invention relates to a plant cultivation plant for cultivating plants in large quantities, and cultivation efficiency can be increased.

## Claims

1. A trolley conveyor for moving the plant port inside the plant cultivation factory, comprising:
a track 210 formed in a zigzag-shaped closed loop shape on the ceiling of the plant cultivation factory;
a chain 220 provided to be movable along the track 210;
a plurality of hanger 260 fixedly coupled to the chain 220 at regular intervals and moving along the track 210 together with the chain 220; and
a port support part 270 fixedly coupled to the lower portion of each of the plurality of hangers 260 and provided with a port loading plate 271 on which the plant port A is stably placed.

2. The method of claim 1, wherein the track 210 includes the horizontal tracks 211 formed in parallel on each layer, the curved track 213 connecting the adjacent horizontal tracks 211 to each other, and an inclined track 215 for connecting the horizontal tracks 211 of different layers, and wherein the chain 220 is adapted to move and circulate along the track 210.

3. The method of claim 2, wherein the chain 220 is formed by successively combining a plurality of chain units 230 and 240 with each other, and
wherein each of the plurality of unit chains 230 and 240 comprises a vertical roller support part provided in the inside of the track 210 in a vertical direction to support a vertical roller that is rotated while contacting the bottom surface of the track part 210; a horizontal roller support part provided on the track 210 in a horizontal direction to support a horizontal roller that is rotated while contacting both inner walls of the track part 210; and an intermediate connecting block provided between the vertical roller support part and the horizontal roller support part to support the vertical roller support part and the horizontal roller support part so as to rotate in the vertical direction and the horizontal direction.

4. A plant cultivation system, compring:
a plant cultivation factory 100 with windows on the ceiling and outer walls:
a trolley conveyor 200 provided on the top of the plant cultivation factory 100 to support a plurality of plant ports on which plants are planted to be movably suspended in the air; and
a control unit 300 for controlling the drive of the trolley conveyor 200 in response to the temperature and humidity of each zone inside the plant cultivation factory 100,
wherein the trolley conveyor 200 including:
a track 210 formed in a zigzag-shaped closed loop shape on the ceiling of the plant cultivation factory;
a chain 220 provided to be movable along the track 210;
a plurality of hanger 260 fixedly coupled to the chain 220 at regular intervals and moving along the track 210 together with the chain 220; and
a port support part 270 fixedly coupled to the lower portion of each of the plurality of hangers 260 and provided with a port loading plate 271 on which the plant port A is seated.

5. The method of claim 4, wherein the plant cultivation factory 100 includes a water supply section 130, a nutrient solution supply section 140, and an insemination section 150, and wherein the track 210 is formed to pass through the water supply section 130, the nutrient solution supply section 140 and the insemination section 150.

6. The method of claim 5, wherein the plant cultivation factory 100 is provided with a packaging section 160 for separating flowers, fruits, or leaves from the plants and then packaging them, and wherein the track 210 is formed to move through the packaging section 160.

7. The method of claim 6, wherein the water supply section 130 is formed in a tunnel shape, comprising:
a water supply pipe 131 formed along the moving direction of the track 210;
a water branch pipe 133 branched to both sides of the water supply pipe 131 and disposed so as to be perpendicular to the inner wall of the water supply section 130; and
nozzles 135 provided in the water branch pipe 133 to supply water to the plant port A loaded on the port support part 270 that is moved along the track 210.

8. The method of claim 7, wherein the insemination section 150 is formed in a tunnel shape, comprising at a lower portion thereof:
an air supply pipe 151 formed along the moving direction of the track 210;
an air branch pipe 153 branched to both sides of the air supply pipe 151 and disposed so as to be perpendicular to the inner wall of the the insemination section 150; and
nozzles 155 provided in the air branch pipe 153 to supply air to the plant port A loaded on the port support part 270 that is moved along the track 210.
